# EUROPEAN PATENT APPLICATION

(11) **EP 2 743 426 A1**
(43) Date of publication of application: **18.06.2014**
(21) Application number: 12786445.2
(22) Date of filing: 14.05.2012
(51) Int. Cl.: E04G 5/04, E04G 21/32, E04B 1/41

(54) **EMBEDDABLE SECURITY ANCHOR**

(30) Priority: 16.05.2011 ES 201130786 P
(71) Applicant: Casas Alvarez, Juan, 08024 Barcelona (ES)
(72) Inventor: Casas Alvarez, Juan, 08024 Barcelona (ES)
(74) Representative: Alier Benages, Elisabet
(86) International application number: PCT/ES2012/070342
(87) International publication number: WO 2012/156562

(57) **Abstract**

This anchoring comprises a hollow piece, made of semi-rigid material, intended to be embedded in the material forming a surface, which delimits an internal cavity for the coupling and fixing of a anchoring mechanism of the scissor variety, comprising two plates, with a frontal portion with a side tooth and a rear portion with an off-centre hole, related to each other by means of a common turn shaft, in order to be turned between a closed position, which facilitates the introduction and extraction thereof into and from the hollow piece and an open position, wherein the teeth of the frontal portions are housed in a number of side enlargements of the hollow piece and the holes of the rear portions are arranged opposite to each other, forming a passage for mounting a fastening element for the load to be supported.

## Description

### Object of the invention

The present invention refers to an embeddable security anchor, of the variety intended to be installed in a surface or construction to form a secure point for hooking lifelines, protection harnesses, elements for elevating or supporting loads and generally for the safely support of any kind of load.

### Application field of the invention.

The present invention is applicable within the sector dedicated to manufacturing anchors for construction and particularly for fastening lifelines, pieces of individual protection equipment, harnesses and general loads.

### Background of the invention.

In the construction field, anchor points for hooking safety elements, personal protection or fastening loads are commonly installed on either a temporary or permanent basis.

The most common anchors are formed by rings joined to a support base or plate, which is fixed to an existing construction by means of different kinds of screws and plugs, such as expansion plugs, chemical plugs, etc.

In addition to requiring holes to be made in the support surface, the installation of these kinds of anchors is long and laborious and requires additional elements to be used, such as the abovementioned fastening plugs and screws.

When the anchor is going to be used for a limited period of time, for example for carrying out repair or maintenance works, it is common to subsequently dismount it in order to reuse it in later works. However, when one wishes to install an anchor permanently, for example to carry out periodic tasks, it is essential that the entire anchor remains fixed to the support surface, which may incur significant costs and lead to an aesthetic modification of the construction when a high number of mooring points exist.

Other security devices known about for installing lifelines in concrete structure construction works, such as that described in document ES 1 068 397 U, comprise a small pot with a first end and a second end at the opening of the pot, there being a chamber at the first end of the pot, said pot having at least one support for the armour of a pillar in order to hold said pot to the armour prior to the concrete being poured and an grip element, configured to resist loads inside the pot. This device, which may be fixed to the armour of a pillar, is mounted permanently, therefore being impossible to remove without causing significant damage to the pillar.

Therefore, the technical problem proposed is to develop an embeddable security anchor which may be placed and extracted quickly and easily into and from an anchoring mechanism in a number of cavities formed in a concrete surface or shape during the construction thereof, which also prevents accidental release of the mooring device whilst it is in use.

### Description of the invention

The characteristics of the embeddable security anchor, object of the present invention, are aimed at achieving the ends proposed in a simple, economically viable way.

The anchoring 1 comprises a hollow piece made of semi-rigid material, intended to be incorporated in the material forming a surface to delimit an internal cavity, suitable for coupling and fastening an extractable anchor mechanism of the scissor variety.

Said hollow piece has a tubular, flat-section neck, having an external moth on its frontal end and a number of side enlargements on its rear end. This hollow piece is preferably positioned on the structural framework of a work, before the concrete is poured, in such a way that once it has set, the same is defined inside a cavity, which may be accessed from the mouth of said hollow piece, in order to place the extractable anchoring.

This hollow piece may be formed from different materials, preferably being a plastic material, in order to reduce the manufacturing costs given that this is a lost piece that will be permanently embedded into the set concrete.

The extractable anchoring mechanism comprises two overlapping plates, which are preferably equal, rotated 180° in relation to one another and related by means of a common turn shaft.

These plates have frontal portions, which are slightly narrower than the neck of the hollow piece, which also define side teeth, directed in opposite directions and rear portions, which are wider than the neck of the hollow piece, having slightly off-centre holes relative to the mid-longitudinal axis of the corresponding frontal portion.

These plates are related by means of a common turn axis, in order for them to be adjusted between a) a closed position, in which the frontal portions are arranged overlapped, making it possible to introduce them into the internal cavity of the hollow piece and the holes of the rear portions are misaligned and b) an open position, in which the teeth of the frontal portions are housed in respective side enlargements of the hollow piece and the holes of the rear portions are arranged opposite to one another, forming a passage for the mounting of a fastening element of the load to be supported, said fastening element acting as a retainer for the anchoring mechanism in the open position.

These characteristics make it possible to mount and dismount the anchoring mechanism in the cavity delimited by the hollow piece quickly and guarantee that the anchoring mechanism remains open whilst it is mounted via the opposing holes of the rear portions, the carabineer, cable or element used to hook the load to be supported.

According to the invention, the plates of the anchoring mechanism have a number of limiting means in the rear portions, which turn towards the open position. In a specific embodiment, these means are formed by a number of screws fixed to the respective plates and housed in a number of curved mounting holes, defined in the opposite plates.

The abovementioned rear portions of the plates frontally define, at the sides opposite the frontal portion, two reassuring oblique planes of actuation stops against the embedding surface of the hollow piece in the open and closed positions of the anchoring mechanism, respectively.

When the anchoring mechanism is in closed position and one of the oblique planes of each plate is introduced into the hollow piece, namely that corresponding to the side of the front portion with the tooth, it collides against the embedding surface of the hollow piece, automatically causing the scissor mechanism to open, also introducing the teeth into the side enlargements of the hollow piece. According to the invention, these side enlargements of the hollow piece are arranged at different levels, each one of them occupying approximately half the height of the cavity defined by the hollow piece for the lateral reception of the respective plate of the anchoring mechanism.

This staggered arrangement of the side enlargements of the hollow piece guarantees that the two plates of the anchoring mechanism work with their greater sides against the opposing surfaces of the cavity defined by the hollow piece when they work under flexion. This prevents just one of the plates from working under flexion and therefore achieves greater resistance to the deformation of the anchoring mechanism.

According to the invention, the hollow piece has a perimeter surface at the end corresponding to the mouth, surrounding said mouth, for it to later be positioned and fastened in a certain position, prior to being embedded in the setting material intended to form the surface into which the anchoring is embedded.

This perimeter surface in the mouth of the hollow piece enables fixation thereof by means of, for example, sticking, nailing or any other technique to the framework containing the setting material as it is poured. This also prevents the setting material from accidentally accessing the internal cavity of said hollow piece, which will subsequently be used to mount the extractable anchoring mechanism.

### Description of the figures.

In order to complement the present description and with the aim of facilitating understanding of the invention characteristics, the present descriptive specification is accompanied with a set of drawings, which provide a non-limiting example thereof.

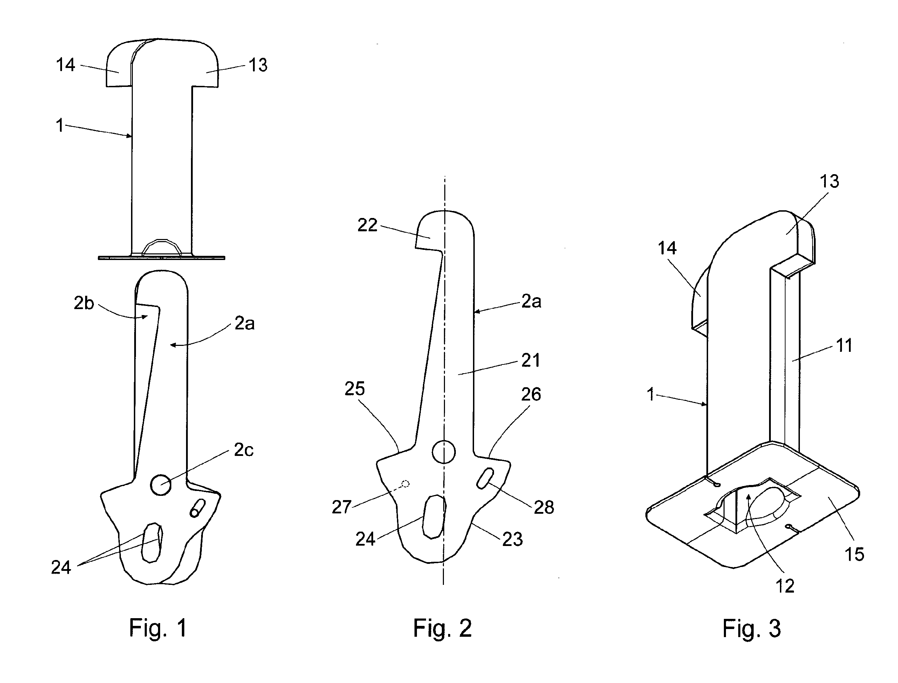

- Figure 1 is an upper plan view of the embeddable security anchoring, wherein the mooring mechanism is represented in the closed position, opposite to the hollow piece.
- Figure 2 is a plan view of one of the reassuring plates of the anchoring mechanism.
- Figure 3 is a perspective view of an example embodiment of the hollow piece formed, in this case, from plastic material.
- Figure 4 is a plan view of the embeddable anchoring according to the invention, wherein the hollow piece is embedded in a mass of set concrete and the anchoring mechanism is introduced inside it, in closed position.
- Figure 5 is an analogous view of the above, with the anchoring mechanism in the open position and locked in this position by a fastening element mounted in such a way that it passes through the holes, in this case opposite the rear portions of the anchoring mechanism plates.

### Preferred embodiment of the invention

In the example embodiment shown in the attached figures, the anchoring comprises a hollow piece (1) made of semi-rigid material, in this case plastic, intended to be embedded in a setting material and an extractable anchoring mechanism (2) intended to be coupled with the possibility of extraction in the internal cavity of the hollow piece (1).

The hollow piece (1) comprises a tubular neck (11) with a flat section which has a mouth (12) opening to the outside at its frontal end and a number of side enlargements (13, 14) at its rear end, arranged at different levels at a height approximately equal to half of the internal cavity of the hollow piece (1). The piece (1) has a perimeter surface (15) around the mouth (12) in order to be fixed to a support surface, for example a shape, before pouring the concrete or setting mass which will form the embedding surface for said piece (1).

The anchoring mechanism (2) comprises two plates (2a, 2b), which in this case are equal, overlap and are at 180° in relation to one another, joined by a turn shaft (12), each one of the plates (2a, 2b) having a frontal portion (21) with a side tooth (22) and a rear portion (23) with a hole (24) which is slightly off centre from the mid-longitudinal shaft of the corresponding frontal portion (21).

This rear portion is wider than the tubular neck (11) of the piece (1) and frontally defines two oblique planes (25, 26) at the opposite sides of the corresponding frontal portion (21).

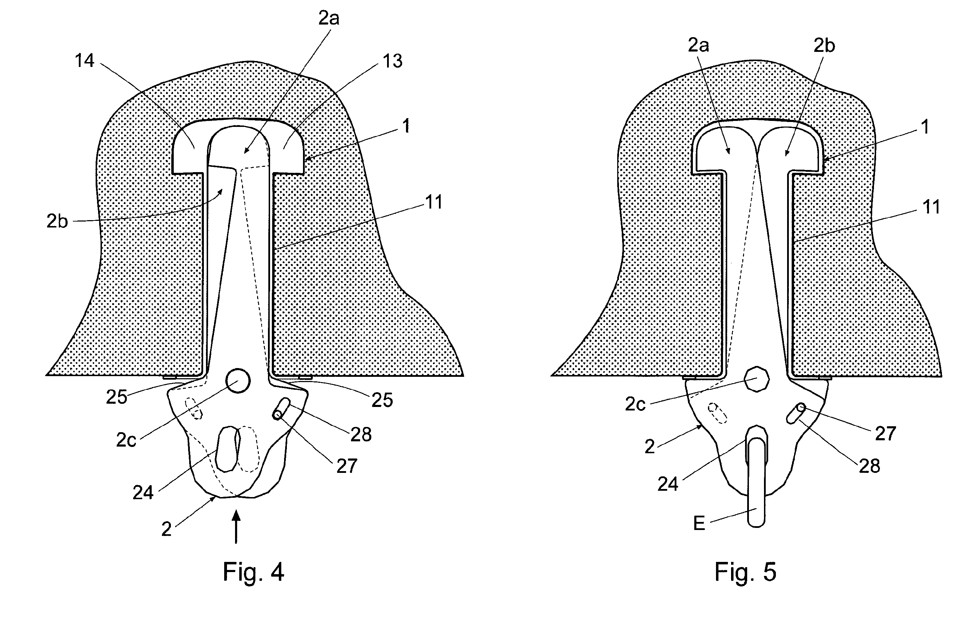

In the mounting position of the anchoring mechanism, the teeth (22) of the plates (2a, 2b) are directed towards the opposite sides, therefore enabling the turn shaft (2c) to turn the plates (2a, 2b) relatively between a closed position and an open position, limited by a number of turn limiting means, formed by a number of screws (27) fixed to the rear portions (23) of each one of the plates (2a, 2b), which are housed in a number of curved mounting holes (28) in the opposite plate (2a, 2b). As can be seen in Figure 4, in the closed position of the anchoring mechanism, the rear portions (21) of the two plates (2a, 2b) are overlapped, which facilitates their frontal introduction into the internal cavity of the hollow piece (1).

In this closed position, the holes (24) in the plates (2a, 2b) are misaligned, as can be seen in Figure 4.

When introducing the anchoring mechanism into the inner cavity of the hollow piece (1) completely, the oblique planes (25) of each one of the plates (2a, 2b) collides against the embedding surface of the hollow piece (1), automatically causing the anchoring mechanism (2) to open, as can be seen in Figure 5. In this position, the teeth (22) of the plates (2a, 2b) are introduced into the side enlargements (13, 14) of the hollow piece (1), which prevents the extraction of the anchoring mechanism in this open position.

In this position, the openings (24) of the plates (2a, 2b) are opposite each other, as can be seen in Figure 5, therefore forming a passage for mounting a fastening element "E", which may be a cable, carabineer or any other element. Once this fastening element "E" has been introduced through the openings (24) in the plates (2a, 2b) of the element "E" itself, it acts as a retainer for the anchoring mechanism in the open position, thereby preventing the same from closing involuntarily and accidentally becoming freed from the cavity delimited by the hollow piece (1).

After having adequately described the nature of the invention, as well as a preferred embodiment thereof, it must be pointed out that the materials, shape, size and arrangement of the elements described may be amended, provided that this does not alter the fundamental characteristics of the invention, claimed below.

## Claims

1. Embeddable security anchor of the variety intended to be attached to a surface to form a safe point for hooking lifelines, protection harnesses, load elevation or support elements and elements for generally supporting any kind of load safely, **characterised in that** it comprises:
- a hollow piece, made of semi-rigid material, intended to be embedded in the material formed from a surface, which also has a tubular neck with a flat-section, having an external mouth on its frontal end and a number of side enlargements on its rear end, said hollow piece delimiting an internal cavity for coupling and fixing a anchoring mechanism,
- an anchoring mechanism of the scissor variety, comprising two equal plates, which overlap and are rotated 180° in relation to one another, these plates having frontal portions, which are slightly narrower than the neck of the hollow piece, which also define side teeth directed in opposite directions and rear portions, which are wider than the neck of the hollow piece, with holes which are slightly off-centre in relation to the mid-longitudinal shaft of the corresponding frontal portion, also being **characterised in that** these plates are related by means of a common turn shaft in order to be adjusted between a) a closed position, in which the frontal portions are arranged overlapped, making it possible to introduce them into the internal cavity of the hollow piece and the holes of the rear portions are misaligned and b) an open position, in which the teeth of the frontal portions are housed in the respective side enlargements of the hollow piece and the holes of the rear portions are opposite each other, forming a passage for mounting a fastening element for the load to be supported, said fastening element acting as a retainer for the anchoring mechanism in the open position.

2. Embeddable anchor, according to claim 1, **characterised in that** the plates of the anchoring mechanism have a number of limiting means in the rear portions, for limiting the turn towards the open position, constituting a number of screws fixed to the respective plates and housed in a number of curved anchoring holes made in the opposite plates.

3. Embeddable anchor, according to any of the previous claims, **characterised in that** the rear portions of the plates frontally define two oblique reassuring planes at the opposite sides of the frontal portion, forming actuation stops against the surface of the surface in the open and closed positions of the anchoring mechanism, respectively.

4. Embeddable anchor, according to any of the previous claims, **characterised in that** the side enlargements of the hollow piece are arranged at different levels, each one occupying approximately half the height of the cavity defined by the hollow piece, for the lateral reception of the respective plate of the anchoring mechanism.

5. Embeddable anchor according to any of the previous claims, **characterised in that** the hollow piece has a perimeter surface at the end corresponding to the mouth, around said mouth, in order to be positioned and fastened in a certain position, prior to being embedded.
